# EUROPEAN PATENT SPECIFICATION

(11) **EP 3 232 793 B1**
(45) Date of publication and mention of the grant of the patent: **27.05.2020**
(21) Application number: 14828404.5
(22) Date of filing: 19.12.2014
(51) Int. Cl.: A21D 6/00, A21D 13/04, A23L 7/10, A21D 13/066

(54) **WATER AND ENERGY SAVING PROCESS FOR MAKING WHOLE WHEAT AND WHOLE GLUTEN-FREE GRAIN FLOUR**
WASSER UND ENERGIESPARENDES VERFAHREN ZUR HERSTELLUNG VON VOLLWEIZEN- UND GLUTENFREIEM VOLLKORNMEHL
PROCÉDÉ D'ÉCONOMIE D'EAU ET D'ÉNERGIE POUR FABRIQUER DE LA FARINE DE BLÉ ENTIER ET DE GRAINS ENTIERS SANS GLUTEN

(43) Date of publication of application: 25.10.2017
(73) Proprietor: Investigacion Tecnica Avanzada S.A. De C.V., C.P. 67110 (MX); Rubio, Felipe A., Edinburg, Texas 78539 (US)
(72) Inventor: RUBIO, Felipe A., Edinburg, Texas 78539 (US); RUBIO, Manuel J., Miami Beach, Florida 33139 (US); CONTRERAS M., Roberto, Guadalupe N.L. C.P. 67110 (MX)
(74) Representative: Brann AB
(86) International application number: PCT/US2014/071584
(87) International publication number: WO 2016/099557

(56) References cited:
- WO-A1-2009/084582
- CN-A- 102 987 296
- US-A- 4 473 593
- US-A- 6 159 519
- US-A1- 2007 148 318

## Description

### BACKGROUND OF THE INVENTION

### Field of the Invention

The present invention relates to a water saving and energy saving process for the continuous production of whole gluten-free grain flour. More particularly, the present invention preconditions the soaked whole-grain with water, and uses an energy efficient blanching treatment with saturated steam during the manufacture of the whole gluten-free flour for the preparation of whole grain products and baked foods.

### Description of Related Art

Every day, the average person needs to consume enough food to provide around 2,150 dietetic calories or Kcal (9 MJ) of energy. The amount will vary depending on age, size and level of physical activity. Average food availability in low developing countries is below 2,030 calories per day per capita, and about 2,700 in nutrition transition countries. In developed countries, by contrast, it is around 3,750 calories and some of this excess has resulted in high levels of obesity and non-communicable chronic diseases. As populations become more urban and incomes rise, diets high in fat, sugar and animal protein replace more traditional diets that were high in complex carbohydrates and fiber. Ethnic cuisine (e.g., Mediterranean) and unique traditional cereal (amaranth, sorghum, rice, corn, wheat and legume (bean, lentil, chickpea) foods are being replaced by fast foods increasing their energy density. Bread making is one of the most ancient methods of cereal processing. Today, flat breads are still the dominant breads and are either unleavened (corn tortilla and wheat chapati) or leavened by microorganisms (wheat bread) or chemical agents (wheat tortilla). The flour may be prepared from grass seeds (cereal), legume and tubers.

The total energy-related costs as a share of the production cost vary widely for food products. For example, in the United States the energy-related costs as a proportion of the total crop production ranged from about 10% for oilseed soybean to about 31% for cereal corn. At present, renewable energy meets over 13% of global primary energy demand. Almost half of this energy comes from traditional sources of biomass used for cook processing. Process-oriented strategies can reduce the environmental impacts with the design and manufacture of sustainable foods.

Minimal processing technologies in the food industry are designed to limit the impact on nutritional and sensory quality while preserving the food without additives. Hydrothermal treatment, i.e., High-Temperature and Short-Time (HTST), is a milder process intended to partially gelatinize the starch and modify its physical properties without destroying granule structure while improving its stability under shear and heat processing. HTST treatment can be accomplished at low moisture (<35%) even at temperatures above the gelatinization temperature, yielding a harder granule (elastic property) after moist-heat treatment (Jacobs et al. 1998; Sair 1967). The existence of well-defined bimodal particle size distributions has been reported in food systems due to disintegration and aggregation processes having both shattering mechanisms (yielding a larger-size group of particles) and surface erosion mechanisms (yielding a smaller-size group of particles). Dominance of either mechanism is determined by the particle's properties and the physical features of the size reduction apparatus (i.e., the impact mill or attrition mill); the coarser the milling, the larger the size mode and harder the fraction in bimodal distributions (Popplewell et al. 1989; Aguilar et al. 1991).

Blanching is a thermal process where the grain or seed is heated for the purpose of inactivating enzymes, modifying texture (starch and protein), and preserving the color, flavor and nutritional value. Hot water and steam are commonly used heating media, but hot gas (dry-heat) has also been used. Steam infusion heating is a direct-contact process where condensation occurs on the surface of a flowable food, under atmospheric pressure. This process requires atmospheric steam, pumpable food and a mechanical device to facilitate the steam heating and condensation.

The cost for water use and its environmental treatment can affect sustainability in expanding cereal processing plants, particularly in areas where water supply is scarce. Also, low or zero-carbon energy technology with reduced energy-related emissions will contribute to the stabilization of greenhouse gas concentration levels.

Commercial rotary cooker/cooler and screw conveyor systems, using hot-water and steam-injection, have been designed to improve blanched food product quality (e.g., MULTI-TURBULENT® blancher, PPM Technologies Inc., Oregon, USA), energy conservation and waste reduction (Lyco VAPOR FLOW® and Lyco PRESSURE FLOW®; Thomas Conveyor Co, Texas, USA), and those disclosed in US 3778521, US 3910175, US 5289759, US 5327817, US 6263785, and US 7348036, and in EP 1061818 and WO 127922A1. US 2007148318 discloses a process for making masa and whole-corn flours from cleaned corn kernel. US 6159519 discloses a process for making whole grain milled product.

Although the above described methods can be useful in producing whole flour, an energy saving process for the continuous production of whole grain flour and whole gluten-free flour using preconditioning with water and efficient blanching with saturated steam was still unavailable in the field at the time of the present invention.

### SUMMARY OF THE INVENTION

Accordingly, the present invention provides a departure from the prior art methods of processing whole gluten-free cereal grain kernel in the production of whole gluten-free grain flour. The method involves water preconditioning and steam blanching with reduced water input, reduced energy demand and reduced carbon dioxide emissions, but also provides a high yield of the desired end product.

Also described is to use an industrial method and saturated steam blancher system to continuously produce coarse and fine material fractions yielding a whole grain flour, for example whole wheat flour. Another object of the invention is to use the industrial method and saturated steam blancher system to continuously produce coarse and fine material fractions yielding whole gluten-free flour.

Still another object of the disclosure is to provide whole gluten-free flour for grain products and baked foods, wherein the flour is uniform and has improved biochemical and viscoelastic properties.

The above and other objects and advantages of the invention are achieved through a continuous process according to the claims.

### BRIEF DESCRIPTION OF THE DRAWINGS

The invention will be more fully understood from the description which follows, taken with reference to the appended drawings.
FIG. 1 is a flowchart that depicts an embodiment not according to the invention, illustrating a continuous process for producing whole wheat flour, and schematically depicting an associated apparatus and system.
FIG. 2 is a flowchart that depicts another embodiment of the invention, illustrating a continuous process for producing whole gluten-free flour, and schematically depicting an associated apparatus and system.
FIG. 3A, 3B and 3C are graphs showing the viscoelastic temperature sweep (elasticity G' and viscosity G" components from 20°C to 160°C) of whole wheat snack dough (3A) and whole wheat tortilla dough (3B) produced with the process of the present disclosure versus dehulled and degermed wheat dough (3C).
FIG. 4A and 4B are graphs showing the viscoelastic temperature sweep (elasticity G' and viscosity G" components from 20°C to 160°C) of whole gluten-free dough produced according to the invention (4A) versus whole wheat dough (4B).
FIG. 5A and 5B are Farinographs and flour water absorption results (dough viscosity at 30°C) of whole wheat tortilla flour produced with the process of the present disclosure (5A) versus conventional dehulled and degermed wheat flour (5B).

### DETAILED DESCRIPTION OF THE INVENTION

The present process for producing whole grain flour is not limited and can be applied to any grain. The process can be applied to gluten cereals such as wheat (*Triticum* spp., soft, hard, durum and bulgur) and barley (*Hordeum* spp.), but also includes rye (*Secale* spp.) and oats (*Avena* spp.) within its scope. Other suitable pseudocereal grain includes buckwheat (*Fagopyrum* spp.).

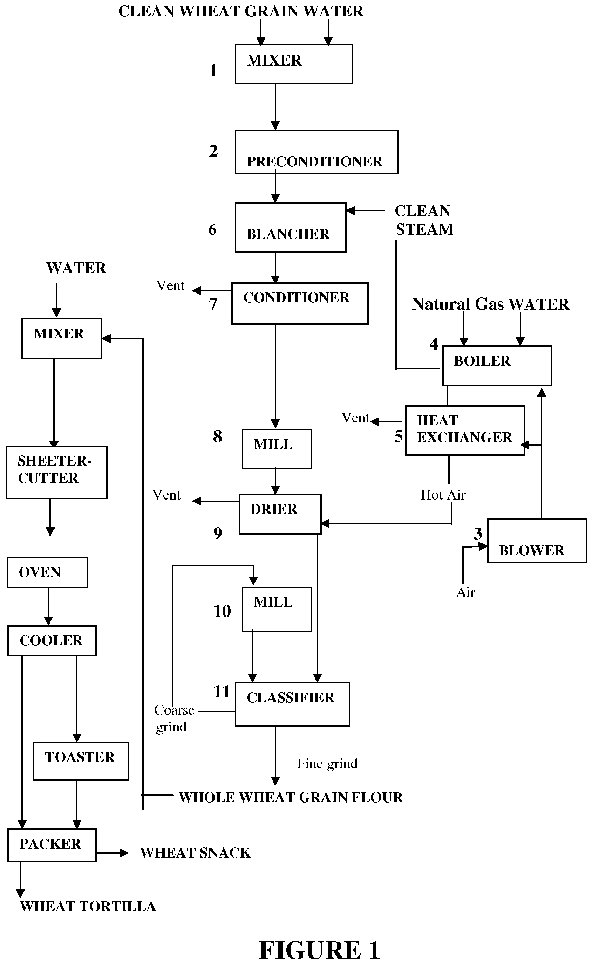

The flowchart illustrated in Figure 1, shows a mixer **1**, a preconditioner **2** with a feeder, a blower **3**, a boiler **4**, a heat exchanger **5**, a steam blancher **6**, a conditioner **7** with a feeder, a mill **8**, a drier **9**, a mill **10**, and a classifier **11**.

According to an embodiment of the method, whole grain, which has been freed of foreign material by dry cleaning, is fed to the mixer **1**, where it is thoroughly sprayed with water for 3 to 6 minutes to uniformly wet the grain surface. The grain moisture can be adjusted, for example from an initial grain moisture of 10% to 15%, or 12% to 13%, to an adjusted moisture of 15% to 30%, preferably 17% to 24%, while using a grain to water ratio of 1.0:0.01 to 1.0:0.20, preferably a ratio of 1:0.06 to 1:0.10.

According to one embodiment, the cleaned whole grain is intact and has not been subjected to any physical action or physical shock (e.g., rolling or flattening) that would induce fissures or cracks in the grain, prior to being sprayed with the water.

According to an embodiment, the water sprayed on the grain can contain a solute, such as a salt or a sugar. In another embodiment, the water does not contain any solute and consists or consists essentially of water.

The wet grain kernel is then fed to the preconditioner **2**, wherein the soaked kernel is tempered for 10 to 60 minutes, preferably 20 to 40 minutes, at ambient temperatures or temperatures of 25°C to 30°C. The tempering allows the water to transfer evenly among the grains and to be adsorbed and infused into the outer layers of the grain.

After completing the preconditioning step, the moisturized and tempered grain kernel is transferred to the steam blancher **6**, e.g., an industrial steam blancher whose design is known per se, wherein saturated steam coming from the boiler **4** is supplied to the tempered grain. The steam is applied to the grain throughout the blancher, and this step can utilize, for example, a rotary cylinder chamber or screw conveyor system. Clean steam is generated from water in the boiler **4**, whereby a fuel, such as natural gas, and clean air is supplied from the blower **3.**

According to an embodiment, the steam can contain a solute, such as a salt or a sugar. In another embodiment, the steam does not contain any solute and consists or consists essentially of water.

This steam blanching step effectively infuses the exposed surfaces of the grain constantly to the water vapor treating medium so that the kernel is uniformly heated and hydrated with steam condensate. The steam blanching takes place for a time period of 1 to 20 minutes, preferably for 5 to 10 minutes, and at a temperature of 75°C to 100°C, preferably from 85°C to 98°C. This affects moisture reabsorption of the grain by an additional 4% to 15%, or 6% to 10%, for a final moisture of the grain of 20% to 35%, preferably 26% to 30%.

The steam absolute pressure is 90kPa to 120kPa, preferably 93.8 kPa to 112.4 kPa, and can be used to control the saturated steam temperature for a desired time. This steaming step (i.e., minimally processed blanching) in the near boiling temperature range effects a partial gelatinization of the starch granules of the most external layers (i.e., the bran or hull), and partial denaturation of the internal layers (i.e., endosperm/germ) in the cereal grain. Preserving the bran and/or hull components increases the micronutrients and phytochemicals in the resulting whole grain, which will increase its food value.

The steam blanched and hydrated kernel is then passed to the conditioner **7**, wherein the kernel is tempered for 20 to 90 minutes, preferably 40 to 60 minutes, and at a temperature of 50°C to 90°C, preferably from 65°C to 85°C, to effect not only a low-moisture conditioning but also a cooling step. The kernel can be cooled, for example, by venting the water vapor from the grain surface.

In distinction from prior art processes, this low-moisture conditioning enhances the subsequent mechanical milling steps because there remains a harder outer surface on the kernel and its moisture content is more nearly uniform. During the low-moisture conditioning, the moisture range of the kernel may decrease, for example to 25% to 28%. At this moisture range, the conditioned and cooled grain remains hard enough to be milled more efficiently than a higher moisture and more elastic grain (i.e., more resistance to breakage), while on the other hand, the grain is sufficiently elastic to avoid excess accumulation of undesired "dust" particles, which are too fine for making whole flour suitable for baked foods.

The conditioned and cooled kernel is then passed through the mill **8**, such as an impact mill (i.e., a hammer mill or turbo mill) at a temperature of 40°C to 80°C, preferably 50°C to 70°C. The milling not only shatters the grain but also erodes the grain into two fractions, namely, a small-sized material and a larger-sized material. The milling operation preferably produces a fine-material (erosion) having a bimodal size distribution and a coarser-material (shattering). The small-sized mode (and softer fraction) is known as the fine-grind material, while the larger-sized mode (and harder fraction) is described as the coarse-grind material, according to the bimodal size distribution. The fine-grind material can be used to produce baked products (e.g., tortilla or chapati), while the coarse-grind material can be used for the preparation of snack foods (e.g., chips or crisps).

The milled material is then passed through the drier **9**, whose design is known per se, such that it is mixed with clean hot air coming from the heat exchanger **5.** Clean air from the blower **3** is heated by waste hot air from the boiler **4** and vented exhaust air (95°C to 105°C). The milled material is thereby dried at temperatures of 100°C to 200°C, preferably 130°C to 170°C, for a short time of less than 5 seconds, preferably 0.5 to 1 second. The hot moist air is vented (75°C-100°C with 13% to 15% moisture). The whole milled material is dried to yield a moisture content of 5% to 15%, or 9% to 11%, depending on the desired bimodal particle size for baked and/or snack food products.

The dried milled material is directed to the classifier **11** with appropriate sized screens (e.g., under 45 US mesh and above 230 US mesh) wherein the small-size mode or fine-grind material is segregated as whole flour ( 65% to 75% of the total weight of incoming grain). Preferably, the large-size mode or coarse-grind material ( 25% to 35% of the total weight) can be recycled to the mill **10** and thereafter further ground for size reduction or attrition to the small-size mode or fine-grind material.

Tables 1 and 2 show a typical biochemical and physicochemical composition for snack and tortilla whole wheat flour (WWF) produced with the process of the present disclosure versus dehulled and degermed wheat flour produced by conventional methods (SELECTA®) with 10% moisture.

**Table 1**

| Biochemical content (g/100 g) | | | |
|---|---|---|---|
| Nutrient | Snack WWF | Tortilla WWF | Selecta® |
| Water | 10.0 | 10.0 | 10.0 |
| Protein | 11.5 | 9.8 | 13.6 |
| Fat | 1.7 | 2.5 | 1.1 |
| Ash | 1.5 | 1.6 | 0.7 |
| Calcium | 0.035 - 0.045 | 0.035 - 0.045 | 0.020 - 0.035 |
| Dietary fiber: | 10.5 | 9.9 | 2.2 |
| Crude fiber | 2.5 | 2.4 | 0.4 |
| Gliadin | | | |
| (R-5 Elisa: 0.6 ppm detection limit) | (> 70) | (> 50) | (> 100) |
| Starch | 64.8 | 66.2 | 72.4 |
| Total Calories: | 319 | 324 | 353 |

**Table 2**

| Physico-chemical properties | | | |
|---|---|---|---|
| Property | Snack WWF | Tortilla WWF | Selecta® |
| Moisture (%) | 10.0 | 10.0 | 10.0 |
| Yield (g-dough/1000g) | 1700 - 1850 | 2150 - 2170 | 1500 - 1600 |
| Adhesivity | 0.5 | 0.4 | 0.3 |
| pH (11% solids) | 6.0 | 6.0 | 6.0 - 6.5 |
| Apparent viscosity (RVA 4-14% solids) | | | |
| Peak (cps/95°C) | 3270 | 6460 | 7640-8540 |
| Final (cps/50°C) | 4170 | 7000 | 7160 - 8120 |
| Particle Size Distribution (% over) | *Bimodal* | *Bimodal* | |
| US Mesh 35 (500 µ) | 0.0 | 0.0 | 0.0 |
| US Mesh 45 (355 µ) | 0.2 | 0.0 | 0.0 |
| US Mesh 60 (250µ) | *14.7* | 0.6 | 0.0 |
| US Mesh 80 (180 µ) | 11.5 | 9.2 | 4.0 |
| US Mesh 100 (150 µ) | 7.6 | *12.2* | 2.7 |
| US Mesh 200 (74 µ) | 18.0 | 9.4 | 31.9 |
| US Mesh 230 (63µ) | *48.0* | *68.6* | 61.4 |

As shown by the results in Table 1, the whole wheat flour (WWF) produced according to an embodiment of the present method has more dietary fiber and crude fiber, and less protein and starch, compared to the dehulled/degermed wheat flour (SELECTA®). In addition, the present method provides a functional change to the WWF, yielding a bimodal particle size distribution (e.g. modes: 150-250 micron and 63 micron) compared to the unimodal size distribution of the SELECTA® flour (mode: 63 micron), as shown in Table 2. This also provides a peak apparent viscosity that is lower in the bimodal WWF compared to the unimodal SELECTA® flour.

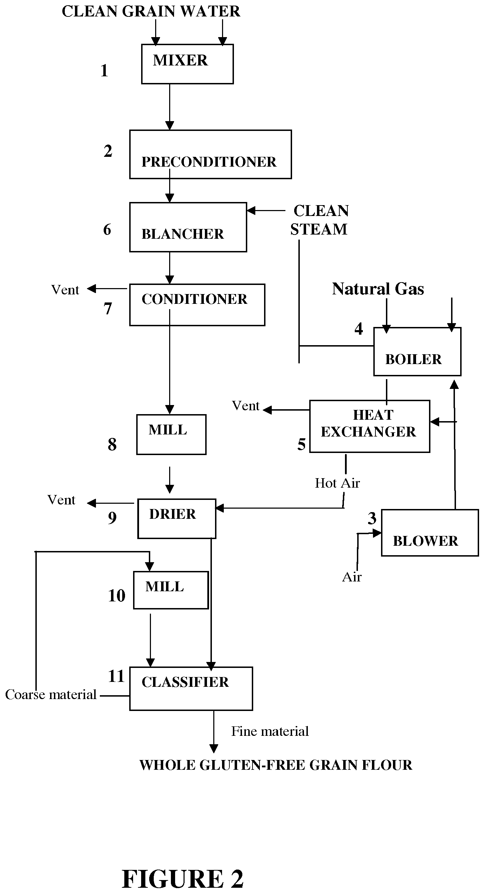

The present process for producing whole gluten-free flour is not limited and can be applied to non-gluten cereals such as sorghum (*Sorghum* spp.) and rice (*Oryza* spp.), but also includes pseudocereals such as amaranth (*Amaranthus* spp.) and quinoa (*Chenopodium* spp.) within its scope. Other suitable seeds include legumes such as bean (*Phaseolus* spp.), lentil (*Lens* spp.), chickpea (*Cicer* spp.), and combinations thereof. Figure 2 shows a mixer **1**; a preconditioner **2** with a feeder; a blower **3**; a boiler **4**, a heat exchanger **5**, an steam blancher **6**; a conditioner **7** with a feeder; a mill **8**; a drier **9**; a mill **10**; and a classifier **11**, according to an embodiment of the invention for producing whole gluten-free flour.

According to this embodiment, whole grain or seed, which has been freed of foreign material by dry cleaning, is fed to the mixer 1, where it is thoroughly sprayed with water for about 1 to 5 minutes to uniformly wet the grain or seed surface. The grain moisture is adjusted, starting from 10% to 15%, or 12% to 13%, to 15% to 30%, preferably 20% to 24%, while using a grain to water ratio of 1.0:0.04 to 1.0:0.2, preferably 1:0.08 to 1:0.10.

According to one embodiment, the cleaned whole grain or seed is intact and has not been subjected to any physical action or physical shock (e.g., rolling or flattening) that would induce fissures or cracks in the grain or seed, prior to being sprayed with the water.

According to an embodiment, the water sprayed on the grain or seed can contain a solute, such as a salt or a sugar. In another embodiment, the water does not contain any solute and consists or consists essentially of water.

The wet grain or seed is then fed to the preconditioner **2**, wherein the soaked seed is tempered for 10 to 90 minutes, preferably 20 to 60 minutes, at ambient temperatures or 25°C to 30°C. The tempering allows the water to transfer evenly among the seeds and to be adsorbed and infused into the outer layers of the seed.

After completing the preconditioning step, the moistened and tempered grain or seed is transferred to the steam blancher **6**, e.g., an industrial steam blancher whose design is known per se, wherein saturated steam from the boiler **4** is supplied to the tempered seed throughout the blancher (e.g., a rotary cylinder chamber or screw conveyor system). Clean steam is generated from water in the boiler **4**, whereby a fuel, such as natural gas, and clean air is supplied from the blower **3.** This effectively infuses every exposed surface of the grain constantly to the water vapor treating medium, so that the seed is uniformly heated and hydrated with steam condensate. The steam blanching takes place for a time period of 1 to 20 minutes, preferably for 5 to 15 minutes, and at a temperature of 75°C to 100°C, preferably from 85°C to 98°C. This affects a moisture reabsorption of 4% to 15%, or 6% to 12%, to produce a final moisture content of 25% to 38%, preferably 29% to 33%.

The steam absolute pressure is 90kPa to 120kPa, preferably 93.8 kPa to 112.4 kPa, and can be used to control the saturated steam temperature for a desired time. This steaming step (i.e., minimally processed blanching) in the near boiling temperature range can effect a partial gelatinization of the starch granules of the most external layers (i.e., the bran or hull) and a partial denaturation of the most internal layers (i.e., the endosperm/germ or cotyledon) in the cereal grain or legume seed.

The blanched and hydrated grain or seed is then passed to the conditioner **7**, wherein the grain/seed is tempered for 15 to 90 minutes, preferably 30 to 60 minutes, and at a temperature of 50°C to 90°C, preferably 65°C to 85°C, to effect not only a low-moisture conditioning but also a cooling step. The grain/seed can be cooled, for example, by venting the water vapor from the grain/seed surface.

In distinction from prior art processes, this low-moisture conditioning enhances the subsequent mechanical milling steps because there is a harder outer surface on the grain or seed, and its moisture content is more nearly uniform. During the low-moisture conditioning, the moisture range of the grain/seed may decrease, for example to 27% to 31%. At this moisture range, the conditioned and cooled grain/seed remains hard enough to be milled more efficiently than that of a higher moisture and more elastic grain/seed (i.e., more resistance to breakage), while on the other hand, the grain/seed is sufficiently elastic to avoid excess accumulation of "dust" particles, which are too fine for making whole flour suitable for producing baked food products.

The conditioned and cooled kernel is passed through the mill **8**, such as an impact mill (i.e., a hammer mill or turbo mill) at a temperature of 40°C to 80°C, preferably 50°C to 70°C, which not only cracks but also erodes the grain/seed into two fractions, namely, a small-sized material and a larger-sized material. The milling operation preferably produces a fine-material (erosion) having a bimodal size distribution and a coarser-material (shattering). The small-sized mode (and softer fraction) is known as the fine-grind material, while the large-sized mode (and harder fraction) is described as the coarse-grind material, according to a bimodal size distribution. The fine-grind material can be used to produce baked products (e.g., tortilla or chapati), while the coarse-material can be used for the preparation of snack foods (e.g., chips or crisps).

The milled material is then passed through the drier **9**, whose design is known per se, such that it is mixed with clean hot air coming from the heat exchanger **5.** Clean air from the blower **3** is heated by waste hot air from the boiler 4 and vented exhaust air (95°C to 105°C). The milled material is thereby dried at low temperatures of 100°C to 220°C, preferably 130°C to 190°C, for a short time of less than 5 seconds, preferably 0.5 to 1 second. The hot moist air is vented (75°C-100°C with 15% to 17% moisture). The whole, gluten-free, milled material is dried to yield a moisture content of 5% to 15%, or 9% to 11%, depending on the desired bimodal particle size for baked and/or snack food products.

The dried milled material is directed to the classifier **11** with appropriate sized screens (e.g., under 35 US mesh, above 230 US mesh) wherein the small-size mode or fine-grind material is segregated as whole flour ( 65% to 75% of the total weight of incoming grain). Preferably, the large-size mode or coarse-grind material ( 25% to 35% of the total weight) is recycled to the mill **10** and thereafter further ground for size reduction or attrition to the small-size fine-grind material. This reground material is then further sieved.

Tables 3 and 4 show a typical biochemical and physicochemical composition for bean and amaranth whole gluten-free flour (WGFF) produced according to the invention versus whole wheat flour (WWF).

**Table 3**

| Biochemical content (g/100 g) | | | |
|---|---|---|---|
| Nutrient | Amaranth WGFF | Bean WGFF | Wheat WWF |
| Water | 10.0 | 10.0 | 10.0 |
| Protein | 15.0 | 23.8 | 9.8-13.3 |
| Fat | 5.5 | 0.9 | 1.8-2.5 |
| Ash | 2.6 | 3.5 | 1.6-1.7 |
| Calcium | 0.165-0.290 | 0.050-0.125 | 0.035-0.045 |
| Dietary fiber: | 9.4 | 15.2 | 9.9-10.8 |
| Crude fiber | 3.1 | 3.8 | 2.4-2.6 |
| Gliadin | | | |
| (R-5 Elisa: 0.6 ppm detection limit) (Gluten-free content is <20 ppm: Codex Alimentarius CX/NFSDU00/4) | (13) | (12) | (> 50-70) |
| Starch | 57.5 | 46.6 | 66.2-62.4 |
| Total Calories: | 334 | 289 | 324-317 |

**Table 4**

| Physico-chemical properties | | | |
|---|---|---|---|
| Property | Amaranth WGFF | Bean WGFF | Wheat WWF |
| Moisture (%) | 10.0 | 10.0 | 10.0 |
| Yield (g-dough/1000g) | 1500 - 1950 | 2000 - 2250 | 1300 - 1600 |
| Adhesivity | 0.9 | 0.6 | 0.3 |
| pH (11% solids) | 6.0 - 6.5 | 6.0 - 6.5 | 6.0 - 6.5 |
| Apparent viscosity (RVA 4-14% solids) | | | |
| Peak (cps/95°C) | 4310 | 2570 | 7640 |
| Final (cps/50°C) | 3130 | 5250 | 7160 |
| Particle Size Distribution (% over) | *Bimodal* | *Bimodal* | *Bimodal* |
| US Mesh 35 (500 µ) | 0.0 | 0.0 | 0.0 |
| US Mesh 45 (355 µ) | 0.0 | 0.2 | 0.2 |
| US Mesh 60 (250µ) | 13.8 | 1.3 | *14.7* |
| US Mesh 80 (180µ) | *16.8* | *4.8* | 11.5 |
| US Mesh 100 (150 µ) | 9.8 | 4.2 | 7.6 |
| US Mesh 200 (74 µ) | *50.6* | *74.5* | 18.0 |
| US Mesh 230 (63µ) | 9.0 | 15.0 | *48.0* |

As shown by the results in Tables 3 and 4, the whole gluten-free flour (WGFF) produced from beans and amaranth according to embodiments of the present method generates a higher dough yield compared to the whole wheat flour (WWF) even though the WGFF has less starch content. For example, as shown in Table 4, the WGFF generated 20% to 45% higher dough yield (at 25°C) compared to the WWF. As shown in Table 3, the gluten-free flour contains lower amounts of gliadin (<13 ppm) than the wheat flour (> 50 ppm gliadin). Gliadin is rich in proline and glutamine and represents a major component of gluten. Also shown in Table 4, the present method produces WGFF having a bimodal particle size distribution, and the peak apparent viscosity is lower in the WGFF than the WWF.

The whole grain flour produced may be rehydrated by mixing the flour with water, for instance at a 1:0.7 to 1:1.15 ratio, to form a whole grain dough with 40% to 55% moisture content, having a firm (elastic) and cohesive (viscous) property, and with enough stickiness (surface property) for example, for a baked tortilla or chapati ( 30% to 40% moisture content) or a dehydrated snack product ( 1.5% to 3% moisture content).

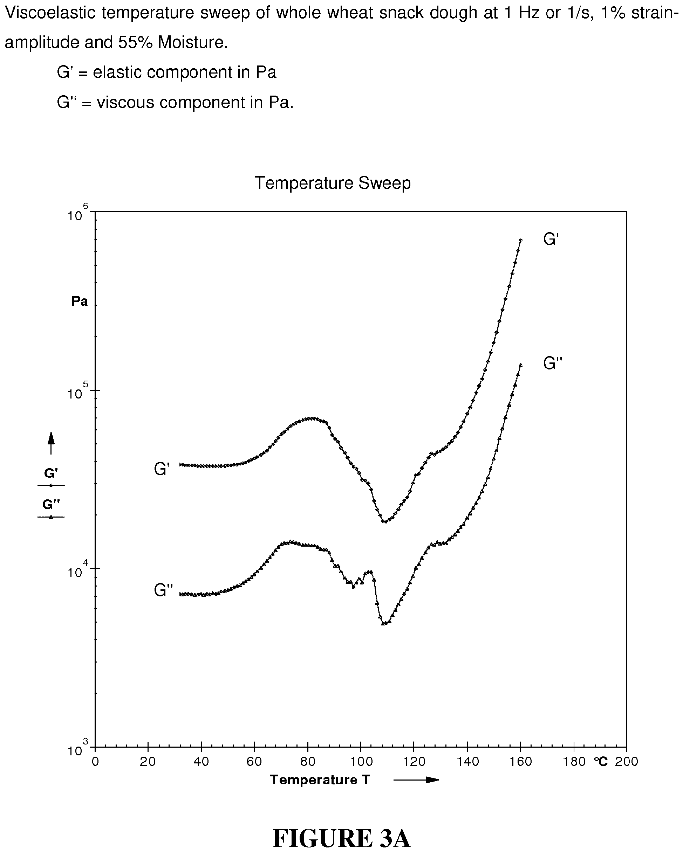

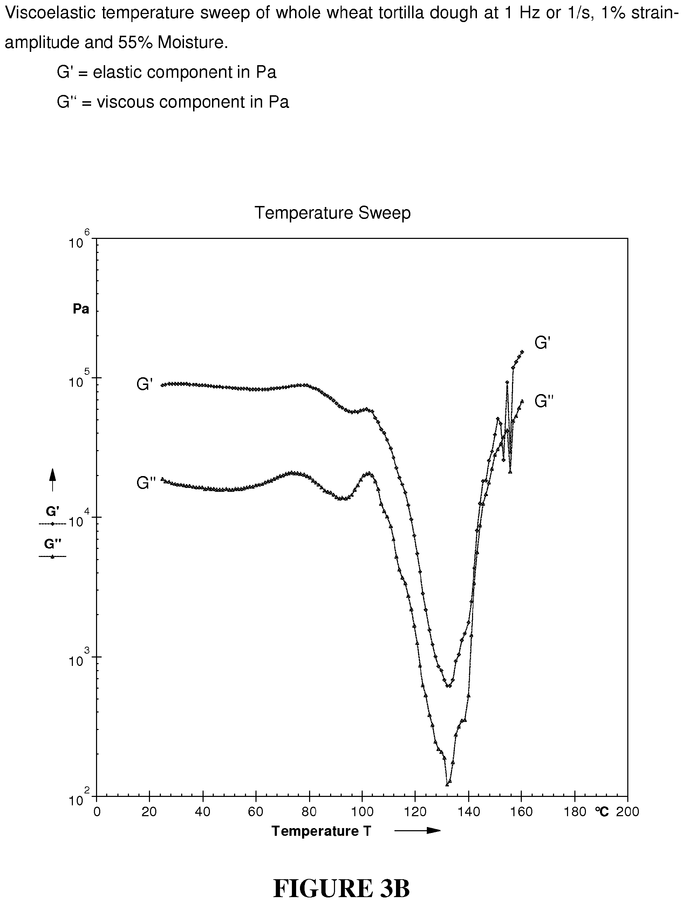

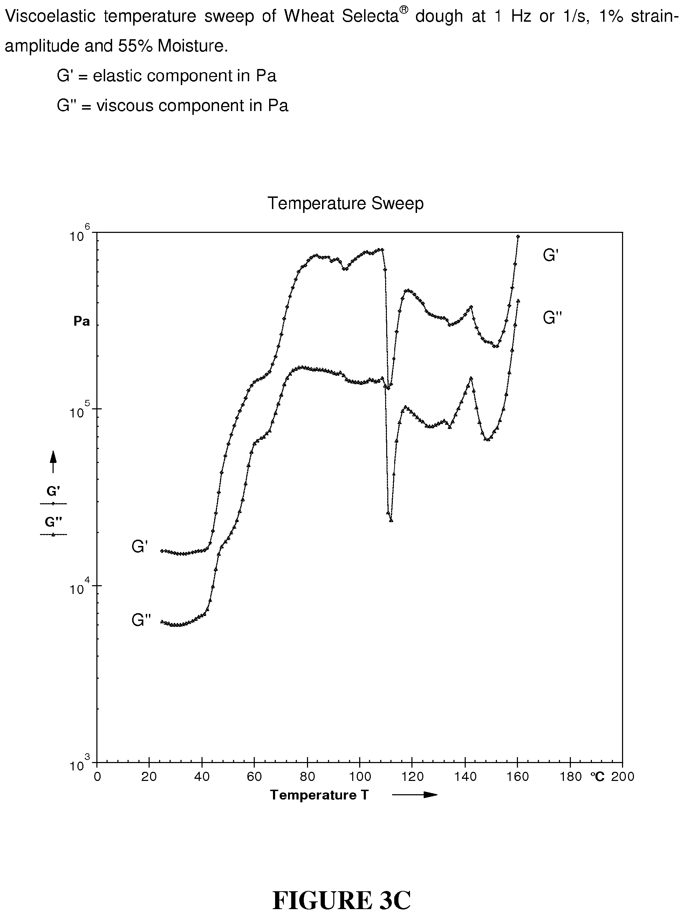

Figures 3A, 3B, and 3C show a viscoelastic temperature sweep from 20°C to 160°C of whole wheat snack dough (3A) and whole wheat tortilla dough (3B) produced according to the present disclosure, versus conventional dehulled and degermed wheat dough (SELECTA®) (3C), with 55% moisture content.

When the whole wheat flour was mixed with water, both starches and proteins became hydrated, but they did not expand as in dough baking where a denatured protein can cross-link with a gelatinized starch. In the whole wheat dough prepared with the whole wheat flour according to the present disclosure, having a lower elastic (G') and viscous (G") moduli (3A & 3B), it was shown that flour water absorption was increased as compared to the conventional dehulled and degermed wheat dough (3C). The finer the bimodal particle size in the whole wheat tortilla flour dough (3B), the higher the elastic and viscous moduli during the starch gelatinization and protein denaturation temperature range (60°C to 80°C).

The whole gluten-free flour produced according to the invention may be rehydrated by mixing the flour with water, for instance at a 1:0.9 to a 1:1.25 ratio, to form a whole gluten-free dough (from 50% to 55% moisture content) with a firm (elastic) and cohesive (viscous) property, and with enough stickiness (surface property) for example, for a baked food product (30% to 45% moisture) or a grain snack product (1.5% to 3% moisture).

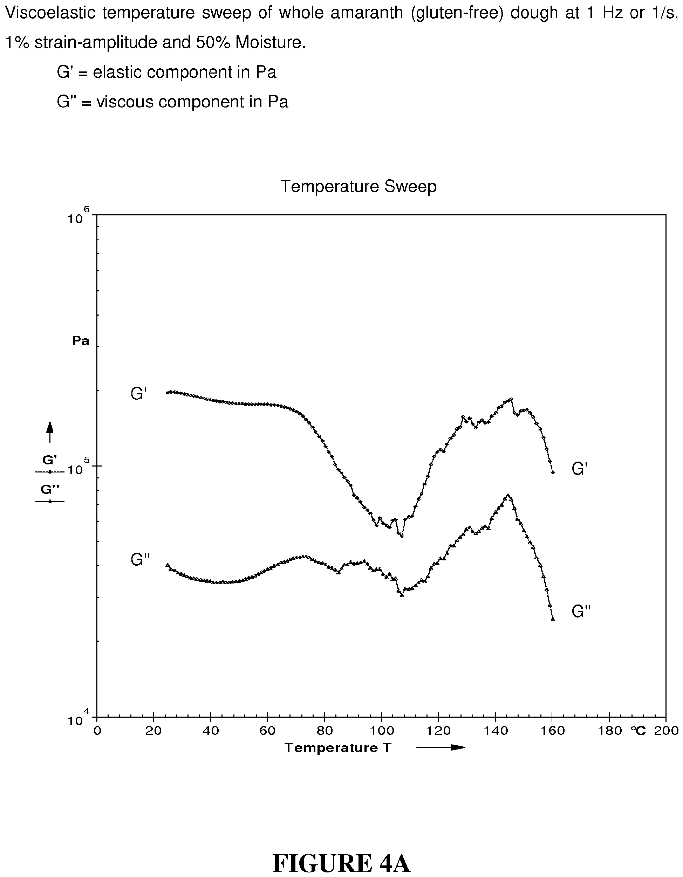

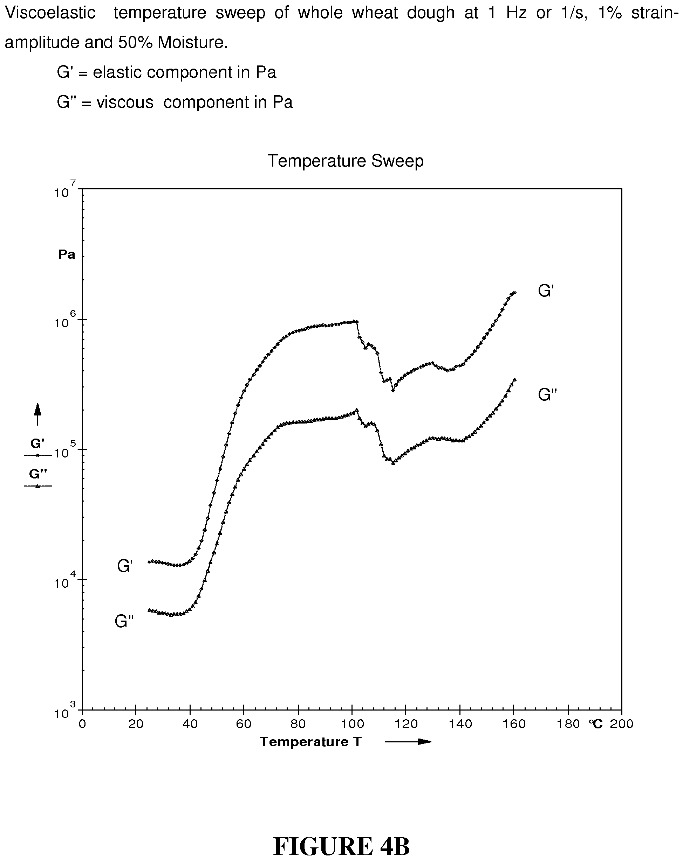

Figures 4A and 4B show a viscoelastic temperature sweep from 20°C to 160°C of whole gluten-free amaranth dough prepared according to the present invention (4A) versus conventional whole wheat dough (4B), with 50% moisture content. In the gluten-free dough, a lower elastic (G') and viscous (G") moduli was found with a higher flour water absorption. The coarser the bimodal particle size in the whole gluten-free flour dough (4A), the lower the elastic and viscous moduli during the starch gelatinization and protein denaturation temperature range (60°C to 70°C).

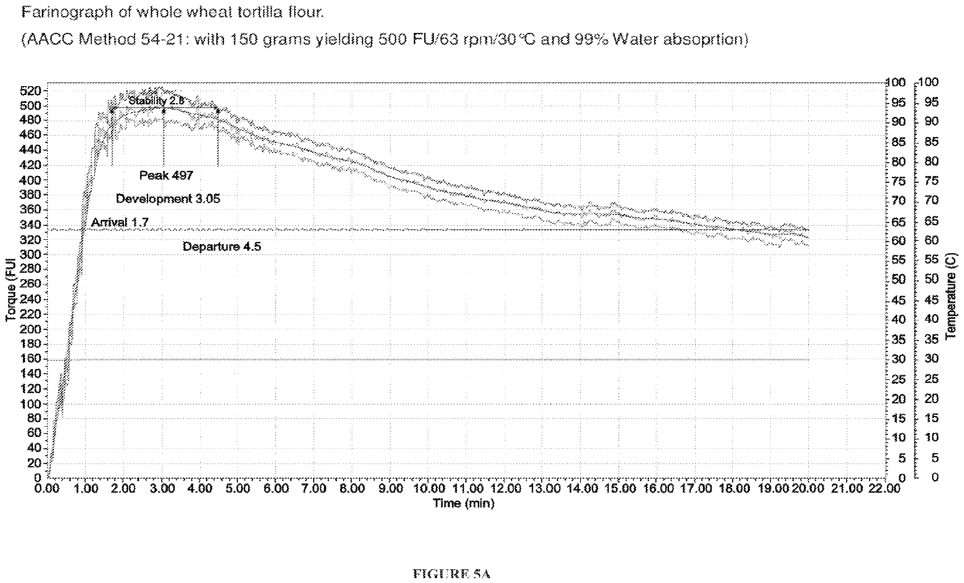

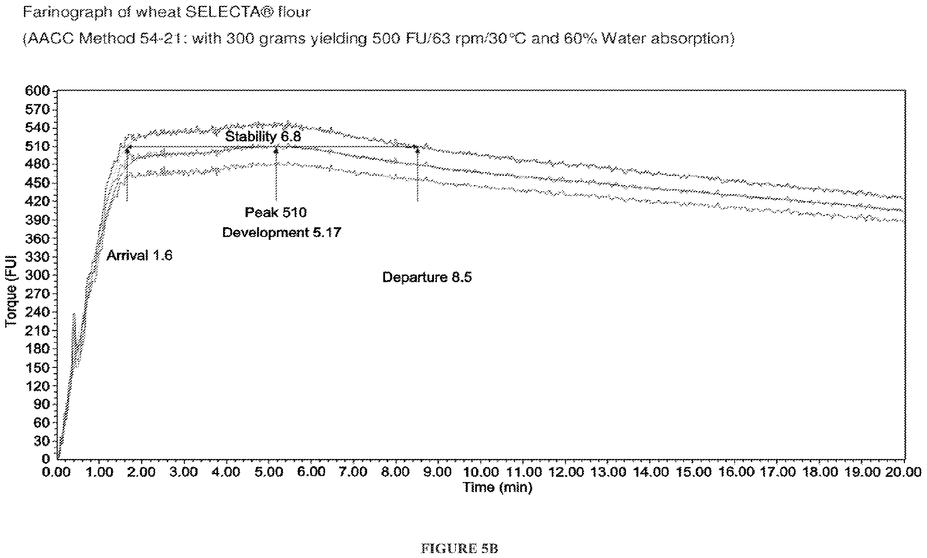

Figures 5A and 5B show Farinographs and flour water absorption results (dough viscosity at 30°C) for whole wheat tortilla flour produced according to the disclosure (5A) versus conventional dehulled and degermed wheat flour (SELECTA®) (5B). The whole wheat flour produced according to the method of the disclosure provided an increased yield and water absorption (99% w/w water) as compared to the dehulled and degermed SELECTA® wheat flour (60% w/w water) for the same apparent dough viscosity (500 FU). The whole wheat flour according to the disclosure has increased water absorption with a 60% reduction in stability time (6.8 to 2.8 minutes) without affecting viscoelastic performance for dough mixing and baking tortilla.

The water preconditioning and steam blanching steps performed according to embodiments of the present method allows for a reduction in water input and a reduction in energy demand compared to conventional blanching processes. As shown in Table 5, the present method provides at least about a 25% reduction in water input, and realistically a 40% to 60% reduction in water input (i.e., 0.20 to 0.45 cubic meter of water per ton of whole flour). The present method also provides at least about a 25% reduction in energy demand, and realistically a 40% to 60% reduction in energy demand (i.e., 0.50 to 0.90 Mbtu or GJ/ton of whole flour) as well as reduced carbon dioxide emissions (i.e., 65 to 130 Kg of CO₂/ton of whole flour) as compared to conventional blanching processes that use more water not only for cooking but also for washing the grain. A conventional method for making dehulled wheat coarse flour is essentially as follows: cleaned wheat is soaked in water, cooked or blanched in water, dried, cooled, partially debranned and cracked (e.g., US Pat. No. 3,778,521).

| Table 5. Comparison chart for Water, Energy and Wastewater | | | | |
|---|---|---|---|---|
| Concept | Unit (per ton of flour) | Water-blanch (conventional) | Steam-blanch | Saving (%) |
| Water | M3 | 0.5 - 0.75 | 0.3 | 40-60 |
| Energy | MBtu (GJoule) | 1.0 - 1.5 | 0.5 - 0.9 | 40-65 |
| Wastewater | M3 | 0.3 - 0.6 | 0 | 100 |

From the foregoing, it will be apparent that it is possible to manufacture whole grain flour, such as whole wheat flour, and whole gluten-free flour, with steam blanching, using a continuous process that is water and energy efficient.

It is to be understood that the embodiments of this invention herein illustrated and described in detail and with published references are by way of illustration and not of limitation. Other changes and modifications are possible and will present themselves to those skilled in the art.

## Claims

1. A method for making whole gluten-free grain flour, comprising continuously and repeatedly performing the following steps:
- providing a cleaned whole gluten-free cereal grain kernel including endosperm, germ and bran components, or a cleaned whole gluten-free legume seed including cotyledon and hull components;
- mixing the cleaned whole cereal grain or whole legume seed with an aqueous solution to uniformly wet the grain kernel/legume seed surface, said aqueous solution consisting of water and at least one of a salt and a sugar;
- preconditioning the wet grain kernel/legume seed to effect a moisture adsorption, comprising tempering the wet grain kernel/legume seed for 10 to 60 minutes at ambient temperatures or temperatures of 25 degrees C to 30 degrees C;
- blanching the moisturized preconditioned grain kernel/legume seed in an atmosphere of saturated steam to at least partially gelatinize and denature the grain kernel/legume seed components and to hydrate with steam condensate the blanched grain kernel/legume seed, wherein the blanching takes place for a time period of 1 to 20 minutes at a temperature of 75 degrees C to 100 degrees C and at a steam absolute pressure of 90kPa to 120kPa;
- conditioning the blanched and hydrated grain kernel/legume seed to stabilize the grain kernel/legume seed to a desired moisture content, comprising tempering the blanched and hydrated grain kernel/legume seed for 20 to 90 minutes at a temperature of 50 degrees C to 90 degrees C;
- milling the conditioned grain kernel/legume seed by to yield a bimodal mixture of a coarse-grind material and a fine-grind material;
- hot-air drying the milled material, and cooling the material;
- screening and classifying the cooled material to separate and recover a fine milled material of size under 500 µm to 63 µm, as a whole grain gluten-free flour, and to separate a coarse milled material of greater than 500 µm.

2. The method of claim 1, wherein the preconditioning is performed to a moisture content of the grain kernel/legume seed of between 20% and 24%.

3. The method according to claim 1 or 2, wherein the blanching step comprises utilizing saturated steam at an absolute pressure of from 93.8 kPa to 112.4 kPa, and hydrating said preconditioned grain kernel/legume seed during 5 to 15 minutes to a moisture content of from 29% to 33%.

4. The method according to any of claims 1-3, wherein the conditioning step comprises cooling the grain kernel/legume seed during 30 to 60 minutes to stabilize the moisture content to a range of from 27% to 31%.

5. The method according to any of claims 1-4 further comprising remilling the separated coarse milled material for further size reduction.

6. The method according to any of claims 1-5, wherein the method provides a 40% to 60% reduction in water input and energy demand compared to conventional blanching.

7. The method according to any of claims 1-6, wherein the conditioning step comprises cooling the grain kernel/legume seed by venting water vapor from the conditioned grain kernel/legume seed.

8. The method according to any of claims 1-7, wherein the fine milled material has a bimodal particle size distribution.

9. The method according to any of claims 1-8, further comprising rehydrating said whole gluten-free flour by mixing the flour with water in an amount from a 1:0.9 to a 1:1.25 water to flour ratio to form a whole grain dough.

10. The method of claim 1, wherein the provided whole cereal grain kernel or whole legume seed is intact and has not been subjected to any physical action or physical shock that would induce fissures or cracks in the grain.

11. The method according to any of claims 1-10, wherein the whole gluten-free grain flour is prepared from whole legume seed.

12. The method of claim 11, wherein the whole gluten-free grain flour is prepared from whole legume seed selected from the group consisting of bean, lentil, chickpea and combinations thereof.

13. The method according to any of claims 1-10, wherein the whole gluten-free grain flour is prepared from whole cereal grain kernel selected from the group consisting of sorghum, rice, amaranth, quinoa, and combinations thereof.

## Patentansprüche

1. Verfahren zum Herstellen von glutenfreiem Vollkornmehl, umfassend die kontinuierliche und wiederholte Durchführung der folgenden Schritte:
- Bereitstellen eines gereinigten ganzen glutenfreien Getreidekornkerns, einschließlich Endosperm, Keim- und Kleiebestandteilen, oder eines gereinigten ganzen glutenfreien Hülsenfrüchtesamens, einschließlich Keimblatt- und Schalenbestandteilen;
- Mischen des gereinigten ganzen Getreidekorns oder ganzen Hülsenfrüchtesamens mit einer wässrigen Lösung, um die Oberfläche des Kornkerns/Hülsenfrüchtesamens gleichmäßig zu befeuchten, wobei die wässrige Lösung Wasser und mindestens eines von einem Salz und einem Zucker enthält;
- Vorkonditionieren des feuchten Kornkerns/Hülsenfruchtsamens, um eine Feuchtigkeitsadsorption zu bewirken, umfassend das Temperieren des feuchten Kornkerns/Hülsenfruchtsamens für 10 bis 60 Minuten bei Umgebungstemperaturen oder Temperaturen von 25 Grad C bis 30 Grad C;
- Blanchieren des feuchten, vorkonditionierten Kornkerns/Hülsenfruchtsamens in einer Atmosphäre von gesättigtem Dampf, um die Komponenten des Kornkerns/Hülsenfruchtsamens zumindest teilweise zu gelatinieren und zu denaturieren und um den blanchierten Kornkern/Hülsenfruchtsamen mit Dampf zu hydratisieren, wobei das Blanchieren während einer Zeitspanne von 1 bis 20 Minuten bei einer Temperatur von 75 Grad C bis 100 Grad C und bei einem absoluten Dampfdruck von 90 kPa bis 120 kPa stattfindet;
- Konditionieren des blanchierten und hydratisierten Kornkerns/Hülsenfruchtsamens, um den Kornkern/Hülsenfruchtsamen auf einen gewünschten Feuchtigkeitsgehalt zu stabilisieren, umfassend das Tempern des blanchierten und hydratisierten Kornkerns/Hülsenfruchtsamens für 20 bis 90 Minuten bei einer Temperatur von 50 Grad C bis 90 Grad C;
- Mahlen des konditionierten Kornkerns/Hülsenfruchtsamens, um eine bimodale Mischung aus einem grobkörnigen und einem feinkörnigen Material zu erhalten;
- Heißlufttrocknen des gemahlenen Materials und Abkühlen des Materials;
- Sieben und Klassifizieren des abgekühlten Materials, um ein feines gemahlenes Material mit einer Größe unter 500 µm bis 63 µm als glutenfreies Vollkornmehl abzutrennen und zurückzugewinnen und um ein grobes gemahlenes Material von mehr als 500 µm abzutrennen.

2. Verfahren nach Anspruch 1, wobei das Vorkonditionieren bis zu einem Feuchtigkeitsgehalt des Kornkerns/Hülsenfruchtsamens zwischen 20 % und 24 % durchgeführt wird.

3. Verfahren nach Anspruch 1 oder 2, wobei der Blanchierschritt das Verwenden von gesättigtem Dampf bei einem absoluten Druck von 93,8 kPa bis 112,4 kPa und das Hydratisieren des vorkonditionierten Kornkerns/Hülsenfruchtsamens für 5 bis 15 Minuten auf einen Feuchtigkeitsgehalt von 29 % bis 33 % umfasst.

4. Verfahren nach einem der Ansprüche 1-3, wobei der Konditionierungsschritt das Abkühlen des Kornkerns/Hülsenfruchtsamens für 30 bis 60 Minuten umfasst, um den Feuchtigkeitsgehalt auf einen Bereich von 27 % bis 31 % zu stabilisieren.

5. Verfahren nach einem der Ansprüche 1-4, weiter umfassend das erneute Mahlen des abgetrennten groben gemahlenen Materials zur weiteren Größenreduzierung.

6. Verfahren nach einem der Ansprüche 1-5, wobei das Verfahren im Vergleich zum konventionellen Blanchieren eine 40 % bis 60 %ige Reduzierung des Wassereinsatzes und des Energiebedarfs bereitstellt.

7. Verfahren nach einem der Ansprüche 1-6, wobei der Konditionierungsschritt das Abkühlen des Kornkerns/Hülsenfruchtsamens durch Ablassen von Wasserdampf aus dem konditionierten Kornkern/Hülsenfruchtsamen umfasst.

8. Verfahren nach einem der Ansprüche 1-7, wobei das feine gemahlene Material eine bimodale Partikelgrößenverteilung aufweist.

9. Verfahren nach einem der Ansprüche 1-8, weiter umfassend das Rehydratisieren des glutenfreien Vollkornmehls durch Mischen des Mehls mit Wasser in einer Menge von 1:0,9 bis 1:1,25 Wasser zu Mehl-Verhältnis, um einen Vollkornteig zu bilden.

10. Verfahren nach Anspruch 1, wobei der bereitgestellte ganze Getreidekornkern oder ganze Hülsenfrüchtesamen intakt ist und keiner physischen Einwirkung oder keinem physischen Schock ausgesetzt wurde, der Risse oder Sprünge im Korn verursachen würde.

11. Verfahren nach einem der Ansprüche 1-10, wobei das glutenfreie Vollkornmehl aus ganzen Hülsenfrüchtesamen hergestellt wird.

12. Verfahren nach Anspruch 11, wobei das glutenfreie Vollkornmehl aus ganzen Hülsenfrüchtesamen hergestellt wird, ausgewählt aus der Gruppe bestehend aus Bohnen, Linsen, Kichererbsen und Kombinationen davon.

13. Verfahren nach einem der Ansprüche 1-10, wobei das glutenfreie Vollkornmehl aus ganzen Getreidekornkernen hergestellt wird, ausgewählt aus der Gruppe bestehend aus Sorghum, Reis, Amaranth, Quinoa und Kombinationen davon.

## Revendications

1. Procédé de fabrication de farine de grains entiers sans gluten, comprenant la réalisation de manière continue et répétée des étapes suivantes :
- fourniture d'un grain de céréale sans gluten entier et nettoyé incluant des composants d'endosperme, de germe et de son, ou d'une graine de légumineuse sans gluten entière et nettoyée incluant des composants de cotylédon et d'enveloppe ;
- mélange du grain de céréale entier ou de la graine de légumineuse entière nettoyés avec une solutions aqueuse pour mouiller de manière uniforme la surface du grain ou de la graine de légumineuse, ladite solution aqueuse étant constituée d'eau et d'au moins l'un d'un sel et d'un sucre ;
- pré-conditionnement du grain ou de la graine de légumineuse mouillés pour obtenir une absorption d'humidité, comprenant le frasage du grain ou de la graine de légumineuse mouillés pendant 10 à 60 minutes à des températures ambiantes ou des températures de 25 degrés C à 30 degrés C ;
- blanchiment du grain ou de la graine de légumineuse pré-conditionnés et humidifiés dans une atmosphère de vapeur saturée pour gélifier et dénaturer au moins partiellement les composants du grain ou de la graine de légumineuse et pour hydrater avec un condensat de vapeur le grain ou la graine de légumineuse blanchis, dans lequel le blanchiment se déroule pendant un laps de temps de 1 à 20 minutes à une température de 75 degrés C à 100 degrés C et à une pression absolue de vapeur de 90 kPa à 120 kPa ;
- conditionnement du grain ou de la graine de légumineuse blanchis et hydratés pour stabiliser le grain ou la graine de légumineuse à une teneur en eau souhaitée, comprenant le frasage du grain ou de la graine de légumineuse blanchis et hydratés pendant 20 à 90 minutes à une température de 50 degrés C à 90 degrés C ;
- mouture du grain ou de la graine de légumineuse conditionnés pour produire un mélange bimodal d'une matière à broyage grossier et d'une matière à broyage fin ;
- séchage à l'air chaud de la matière moulue, et refroidissement de la matière ;
- criblage et classification de la matière refroidie pour séparer et récupérer une matière finement moulue d'une dimension de moins de 500 µm à 63 µm, en tant que farine de grains entiers sans gluten, et pour séparer une matière grossièrement moulue supérieure à 500 µm.

2. Procédé selon la revendication 1, dans lequel le pré-conditionnement est réalisé jusqu'à obtenir une teneur en eau du grain ou de la graine de légumineuse comprise entre 20 % et 24 %.

3. Procédé selon la revendication 1 ou 2, dans lequel l'étape de blanchiment comprend l'utilisation de vapeur saturée à une pression absolue de 93,8 kPa à 112,4 kPa, et l'hydratation dudit grain ou de ladite graine de légumineuse pré-conditionnés durant 5 à 15 minutes jusqu'à obtenir une teneur en eau de 29 % à 33 %.

4. Procédé selon l'une quelconque des revendications 1 à 3, dans lequel l'étape de conditionnement comprend le refroidissement du grain ou de la graine de légumineuse durant 30 à 60 minutes pour stabiliser la teneur en eau dans une plage de 27 % à 31 %.

5. Procédé selon l'une quelconque des revendications 1 à 4 comprenant en outre une nouvelle mouture de la matière grossièrement moulue séparée pour réduire encore sa dimension.

6. Procédé selon l'une quelconque des revendications 1 à 5, dans lequel le procédé permet une réduction de 40 % à 60 % de l'apport en eau et de la demande en énergie par rapport à un blanchiment classique.

7. Procédé selon l'une quelconque des revendications 1 à 6, dans lequel l'étape de conditionnement comprend le refroidissement du grain ou de la graine de légumineuse par évacuation de la vapeur d'eau du grain ou de la graine de légumineuse conditionnés.

8. Procédé selon l'une quelconque des revendications 1 à 7, dans lequel la matière finement moulue présente une distribution granulométrique bimodale.

9. Procédé selon l'une quelconque des revendications 1 à 8, comprenant en outre la réhydratation de ladite farine complète sans gluten par mélange de la farine avec de l'eau en une quantité correspondant à un rapport eau-farine de 1:0,9 à 1:1,25 pour former une pâte de grains entiers.

10. Procédé selon la revendication 1, dans lequel le grain de céréale entier ou la graine de légumineuse entière fournis sont intacts et n'ont été soumis à aucune action physique ni à aucun choc physique susceptible d'induire des fissures ou des craquelures dans le grain.

11. Procédé selon l'une quelconque des revendications 1 à 10, dans lequel la farine de grains entiers sans gluten est préparée à partir d'une graine de légumineuse entière.

12. Procédé selon la revendication 11, dans lequel la farine de grains entiers sans gluten est préparée à partir d'une graine de légumineuse entière choisie dans le groupe constitué du haricot, de la lentille, du pois chiche et de leurs combinaisons.

13. Procédé selon l'une quelconque des revendications 1 à 10, dans lequel la farine de grains entiers sans gluten est préparée à partir d'un grain de céréale entier choisi dans le groupe constitué du sorgho, du riz, de l'amarante, du quinoa et de leurs combinaisons.
